# EUROPÄISCHE PATENTSCHRIFT

(11) **EP 0 722 664 B1**
(45) Veröffentlichungstag und Bekanntmachung des Hinweises auf die Patenterteilung: **05.09.2001**
(21) Anmeldenummer: 96100421.5
(22) Anmeldetag: 12.01.1996
(51) Int. Cl.: A22C 13/00

(54) **Wursthülle auf Polyamidbasis**
Sausage casing based on polyamide
Enveloppe pour saucisses à base de polyamide

(30) Priorität: 21.01.1995 DE 19501834
(43) Veröffentlichungstag der Anmeldung: 24.07.1996
(73) Patentinhaber: HOECHST AKTIENGESELLSCHAFT, 65926 Frankfurt am Main (DE)
(72) Erfinder: Delius, Ulrich, Dr., D-60529 Frankfurt (DE); Beissel, Dieter, D-65203 Wiesbaden (DE)
(74) Vertreter: Zounek, Nikolai, Dipl.-Ing.

(56) Entgegenhaltungen:
- EP-A- 0 133 867
- EP-A- 0 325 151
- EP-A- 0 408 390
- EP-A- 0 450 435
- EP-A- 0 573 306
- EP-A- 0 620 244
- DE-A- 4 001 612
- DE-A- 4 141 292
- DE-A- 4 339 337
- US-A- 4 461 808

## Beschreibung

Die Erfindung betrifft eine schlauchförmige Wursthülle auf Polyamidbasis, die besonders für Koch- und Brühwurst geeignet ist.

Es gibt bereits zahlreiche Kunststoffolien zur Verpackung von pastös oder schmelzflüssig abfüllbaren Lebensmitteln. In der Regel werden sie auf der Basis von Polyethylenterephthalat (PET), Polyvinylidenchlorid (PVDC) und Polyamid (PA) hergestellt. Biaxial verstreckte PET-Hüllen eignen sich jedoch nicht für Koch- und Brühwurst, da sie sich kaum dehnen lassen und auch nur wenig schrumpfen können. PVDC-Hüllen sind zwar wesentlich dehnbarer, verlieren aber nach dem Füllen leichter ihre Form. Dies wird besonders deutlich, wenn die Würste über längere Zeit hängen. Polyamidhüllen sind dehnbarer, schrumpfen mehr und sind deshalb für Koch- und Brühwurst besser geeignet.

In der DE-A 28 50 182 (≈ GB-A 2 035 198) ist eine in Längs- und Querrichtung schrumpffähig verstreckte und thermofixierte, einschichtige Hülle aus einem aliphatischen Polyamid, dessen Glasumwandlungspunkt im trockenen Zustand mindestens 48 °C beträgt und sich bei Feuchtigkeitsaufnahme auf mindestens 3 °C erniedrigt, beschrieben. Konkret offenbart sind Polyamid 6 (= Polycaprolactam), Polyamid 7 [= Poly(7-amino-heptansäurelactam) = Poly(ω-önanthsäurelactam)], Polyamid 6,6 (= Polyamid aus Hexamethylendiamin und Adipinsäure) und Polyamid 6,10 [= Polyamid aus Hexamethylendiamin und Decandisäure (= Sebacinsäure)].

Eine ähnliche Hülle ist in der DE-A 28 50 181 (≈ GB-A 2 035 198) beschrieben. Sie besteht aus einem Polymerblend, das neben dem aliphatischen Polyamid noch ein Ionomerharz, ein modifiziertes Ethylen/Vinylacetat-Copolymer und/oder ein quartäres Polymer mit Einheiten aus Ethylen, Butylen, einer aliphatischen, ethylenisch ungesättigten (C₃-C₅) Carbonsäure und einem Ester dieser Carbonsäure mit (C₁-C₈)Alkoholen enthält. Die Hülle zeigt nach dem Anschneiden eine verringerte Neigung zum Weiterreißen. Diese Hüllen werden ebenfalls für Koch- und Brühwurst verwendet. Das Wurstbrät muß jedoch mit einem Druck von etwa 0,3 bis 0,6 bar eingefüllt werden, um die Hülle zu dehnen.

Da das Wurstbrät nach dem Brühen an Volumen verliert, muß die Hülle diesen Verlust ausgleichen, damit sie faltenfrei anliegt, d.h. sie muß in gleichem Maß schrumpfen wie ihr Inhalt. Die bekannten Hüllen sind aber nur begrenzt schrumpffähig und werden deshalb während des Füllvorgangs gedehnt. Der notwendige Fülldruck liegt dabei an der Grenze des mit den bekannten Wurstfüllmaschinen Möglichen. Bei einer Handabfüllung ist der Druck so gering, daß sich solche Hüllen vom Wurstbrät lösen ("die Hülle stellt ab") und Falten bilden würden, was die Wurst in den Augen des Verbrauchers "unansehnlich" und "nicht mehr frisch" erscheinen ließe.

Eine einschichtige Wursthülle aus einem Polyamid, das mindestens 5 % seines Gewichts an Wasser aufnehmen kann, ist in der DE-A 32 27 945 (≈ US-A 4 560 520/4 601 929) offenbart. Sie neigt weniger dazu, nach dem Anschneiden weiter aufzureißen, als die aus der DE-A 28 50 182 bekannte. Ausgangsmaterialien für diese Hülle sind insbesondere Polyamid 6 6 und Polyamid 6,6. Hergestellt wird sie durch Extrudieren, Verstrecken des extrudierten Schlauchs in Längs- und Querrichtung und anschließendes vollständiges Thermofixieren unter kontrollierter Schrumpfung. Die kontrollierte Schrumpfung beträgt in jeder Richtung 15 % bis etwa 40 %, im Regelfall etwa 20 %. Auch hier muß die Hülle durch erhöhten Druck während des Füllens aufgeweitet werden, wenn sie später faltenfrei bleiben soll.

Die mechanischen Eigenschaften von verstreckten Polyamidhüllen hängen stark von ihrem Wassergehalt ab. Es ist ein Mindestwassergehalt erforderlich, um die Hüllen während des Füllvorgangs ausreichend dehnbar und geschmeidig zu halten. Wasser und Wasserdampf erhöhen aber während des Brühens diesen Wassergehalt so, daß die mechanischen Eigenschaften der Hüllen negativ beeinflußt werden.

Eine einschichtige Hülle auf Polyamidbasis für Koch- und Brühwürste, die auch beim Brühen formstabil bleibt, ist in der EP-A 0 176 980 (= US-A 4 659 599) offenbart. Sie besteht aus einem Gemisch von Polyamid und Polyester. Das Polyamid ist ein gesättigtes, lineares, aliphatisches Polyamid, insbesondere PA 6, der Polyester ein Polyterephthalsäureester und/oder ein Copolyester mit Terephthalsäure- und Isophthalsäure-Einheiten. Durch die Polyester-Beimischung ist die Hülle relativ trüb und zeigt einen unnatürlichen metallischen Glanz. Sie ist zudem nur wenig dehnbar und muß unter vergleichbar hohem Druck gefüllt werden, wenn sie faltenfrei sein soll.

Die einschichtige, biaxial streckorientierte und thermofixierte Wursthülle gemäß der DE-A 39 43 024 (≈ US-A 5 326 613) ist glasklar, schimmert nicht metallisch oder perlmuttartig und zeigt eine hohe Rückstellelastizität. Hergestellt ist sie aus einem Polymerblend bestehend aus Polycaprolactam (= Polyamid 6) und einem aromatischen Copolyamid aus Hexamethylendiamin-, Terephthalsäure- und Isophthalsäure-Einheiten. Auch diese Hülle ist in erster Linie für die maschinelle Abfüllung unter Druck vorgesehen. Sie ist für eine manuelle Abfüllung weniger geeignet, weil sie meist nicht geschmeidig genug ist.

In der EP-A 450 435 ist eine ein- oder mehrschichtige, vorzugsweise biaxial verstreckte Wursthülle mit einer guten Barrierewirkung gegen Wasserdampf und Sauerstoff offenbart. Die Hülle bzw. mindestens eine Schicht darin besteht aus einem Polyamid/Polyolefin-Gemisch, wobei das Gemisch 60 bis 95 Gew.-% eines aliphatischen Polyamids und/oder Copolyamids und 5 bis 40 Gew.-% eines damit teilverträglichen säuremodifizierten Olefin-Polymers und/oder -Copolymers, deren Carboxylgruppen als freie Säure vorliegen, enthält. Das Polyamid bzw. Copolyamid ist bevorzugt PA 6, PA 6,6,6, PA 6,10 und PA 6,12.

In der EP-A 0 573 306 ist eine schlauchförmige, mehrschichtige, biaxial verstreckte, schrumpffähige Wursthülle beschrieben. Die Hülle enthält eine Schicht aus einem Polymerblend, bestehend aus Polyamid 6 und mindestens 5 Gew.-% eines Copolyamids (z. B. PA 6,12 oder PA 6/69). Diese Schicht ist von anderen Schichten umgeben, speziell von Polyolefinschichten. Die Polyamidschicht ist im Vergleich zu den Polyolefinschichten relativ dünn. Die in der EP-A konkret offenbarten Nahrungsmittelhüllen sind sämtlich sechsschichtig.

In der US-A 4 461 808 sind Flachfolien aus einem Blend von Polyamid 66 und einem anderen aliphatischen Polyamid, ausgewählt aus der Gruppe bestehend aus PA 6, PA 11, PA 12 und PA 6,12, beschrieben, wobei das Gewichtsverhältnis von PA 66 zu dem anderen Polyamid im Bereich von 94 : 6 bis 10 : 90 liegt. Die Folie kann mono- oder biaxial verstreckt sein. Offenbart ist daneben auch ein Laminat mit einer Schicht aus dem Polyamidblend und einer heißsiegelfähigen Schicht (sealant web) aus Polyethylen, Ethylen/Vinylacetat-Copolymeren, Ionomeren und/oder Polyvinylchlorid.

Es bestand daher die Aufgabe, eine Wursthülle, insbesondere für Koch- und Brühwurst, zur Verfügung zu stellen, die sich nicht nur für maschinelle, sondern auch für manuelle Abfüllung eignet. Sie muß folgenden Anforderungen genügen:

Die Festigkeit der Hülle darf während des Brühens (dies geschieht in der Praxis bei einer Temperatur von etwa 80 °C) nicht so weit abnehmen, daß sie platzt oder einreißt. Beim Abkühlen und muß die Hülle mit dem Inhalt schrumpfen, ohne abzustellen oder gar Falten zu bilden. Dadurch wird gleichzeitig verhindert, daß sich Wurstgelee unter der Hülle ansammelt. Sie soll zudem immer soviel Spannung haben, daß die Wurst einen prallen und frischen Eindruck macht. Sie soll ausreichend geschmeidig sein und einen weichen Griff haben, damit sie auch für die manuelle Abfüllung der Wurst (bei einem gegenüber dem maschinellen Füllen verminderten Druck) geeignet ist. Der zum Verschließen der Wurstenden üblicherweise verwendete Metallclip soll auf der Hülle möglichst rutschfest sitzen, d.h. die Hülle soll eine hohe Reibung gegenüber Metall aufweisen. Die Hülle soll für Wasserdampf und Sauerstoff wenig durchlässig sein, um den Gewichtsverlust während der Lagerung gering zu halten und einem Verderb durch Oxidation vorzubeugen. Im Aussehen soll sie möglichst transparent sein und einen ansprechenden Glanz haben, da Würste in einer trüben oder milchigen Hülle vom Verbraucher wenig geschätzt werden. Sie soll schließlich aus preiswerten Rohstoffen einfach herstellbar sein.

Gelöst wird die Aufgabe durch eine einschichtige, biaxial streckorientierte und thermofixierte Wursthülle auf Basis von Polyamid, dadurch gekennzeichnet, daß sie im wesentlichen aus
a) Polyamid 6,
b) 5 bis 50 Gew.-%, bezogen auf das Gesamtgewicht aller Polymere in der Schicht, eines
   b₁) aliphatischen Copolyamids mit Einheiten der Formeln -NH-[CH₂]₅-CO- und -NH-[CH₂]ₘ-CO-, wobei m eine ganze Zahl von 7 bis 11 ist, und/oder eines
   b₂) aliphatischen Copolyamids mit Einheiten der Formeln -NH-[CH₂]₅-CO-, -NH-[CH₂]ₙ-NH- und -CO-[CH₂]ₒ-CO-, wobei n eine ganze Zahl von 6 bis 12 und o eine ganze Zahl von 7 bis 10 ist,
c) bis zu 20 Gew. -% eines amorphen Copolyamids mit Hexamethylendiamin-, Terephthalsäure- und Isophthalsäure-Einheiten
und gegebenenfalls
d) bis zu 20 Gew.-% eines mit Carboxygruppen modifizierten Polyolefins
besteht. Die Summe der Gewichtsprozente der Komponenten a) bis d) ist gleich 100, wenn keine der weiter unten genannten Bestandteile hinzugefügt werden.

Das molare Verhältnis der Einheiten der Formel -NH-[CH₂]₅-CO- zu denen der Formel -NH-[CH₂]ₘ-CO- in dem aliphatischen Copolyamid b₁) beträgt bevorzugt von 95:5 bis 20:80, besonders bevorzugt von 60:40 bis 30:70. Das molare Verhältnis der Einheiten der Formel -NH-[CH₂]₅-CO- zu denen der Formeln -NH-[CH₂]ₙ-NH- und -CO-[CH₂]ₒ-CO- in den aliphatischen Copolyamiden b₂) beträgt bevorzugt von 95:5 bis 25:75, besonders bevorzugt von 70:30 bis 30:70. Die Einheiten der Formeln -NH-[CH₂]ₙ-NH- und -CO-[CH₂]ₒ-CO- liegen dabei in praktisch äquimolaren Mengen vor.

In den aliphatischen Copolyamiden b₁) ist m bevorzugt 7 oder 11, d.h. die Einheiten der Formel -NH-[CH₂]ₘ-CO-sind bevorzugt solche aus 8-Amino-octansäure (= 8-Aminocaprylsäure) oder 12-Amino-dodecansäure (= 12-Amino-laurinsäure).

In den aliphatischen Copolyamiden b₂) ist n bevorzugt 6 und o bevorzugt 7, 8 oder 10, d.h. die Einheiten der Formel -NH-[CH₂]ₙ-NH- sind bevorzugt solche aus Hexan-1,6-diyldiamin (= Hexamethylendiamin) und die Einheiten der Formel -CO-[CH₂]ₒ-CO- sind bevorzugt solche aus Non-andisäure (= Azelainsäure), Decandisäure (= Sebacinsäure) oder Dodecandisäure. Das Copolyamid aus Hexamethylendiamin und Azelainsäure wird allgemein als Polyamid 69 (oder Polyamid 6,9), das aus Hexamethylendiamin und Sebacinsäure als Polyamid 610 (oder Polyamid 6,10) und das aus Hexamethylendiamin und Dodecandisäure als Polyamid 612 (oder Polyamid 6,12) bezeichnet. Das Copolyamid mit Einheiten aus ∈-Caprolactam, Hexamethylendiamin und Azelainsäure wird schließlich als Polyamid 6/69 bezeichnet. Hüllen, die die Komponente b₂) enthalten, zeigen eine besonders gute Transparenz.

Der Anteil der Komponente b) beträgt bevorzugt 10 bis 30 Gew.-%, der des - durch die Terephthalsäure- und Isophthalsäure-Einheiten teilweise aromatischen - amorphen Copolyamids c) bevorzugt 5 bis 15 Gew.-%, jeweils bezogen auf das Gesamtgewicht aller Polymere in der Schicht. Copolyamide mit Hexamethylendiamin- und Terephthalsäure- bzw. Isophthalsäure-Einheiten werden abgekürzt als PA 6-T bzw. PA 6-I bezeichnet.

Das mit Carboxygruppen modifizierte Polyolefin d) ist bevorzugt ein Copolymer mit Einheiten aus Ethylen und (Meth)acrylsäure. (Meth)acrylsäure steht dabei für Acrylsäure und Methacrylsäure. Die (Meth)acrylsäure-Einheiten haben darin bevorzugt einen Anteil 2 bis 25 Gew.-%. Der Anteil der Komponente d) beträgt bevorzugt ebenfalls 5 bis 15 Gew.-%, wiederum bezogen auf das Gesamtgewicht der Polymeren in der Schicht. Vor allem die Komponenten c) und d) bewirken die verringerte Durchlässigkeit der Hülle für Sauerstoff und Wasserdampf.

Die erfindungsgemäße Wursthülle enthält gegebenenfalls noch Farbstoffe, Pigmente und/oder Verarbeitungshilfsmittel. Der Anteil dieser Bestandteile ist relativ gering, so daß die wesentlichen Eigenschaften der Wursthülle dadurch praktisch unbeeinflußt bleiben.

In einer besonders bevorzugten Ausführungsform enthält die erfindungsgemäße Wursthülle 40 bis 80 Gew.-% der Komponente a), 10 bis 30 Gew.-% der Komponente b) und jeweils 5 bis 15 Gew.-% der Komponenten c) und d). Das optimale Verhältnis der Komponenten richtet sich auch nach dem Durchmesser der Wursthülle, seiner Wandstärke und der Art der Verwendung.

Die erfindungsgemäße Wursthülle hat im Vergleich zu einer Hülle aus reinem Polyamid 6 eine wesentlich höhere Geschmeidigkeit und einen besseren "Griff", insbesondere im gewässerten Zustand. Sie umschließt die gebrühten Würste nach dem Erkalten wesentlich straffer als bisher gewohnt, obwohl die Schrumpfspannung (gemessenen in Querrichtung in trockenem Zustand bei 100 °C) gegenüber herkömmlichen Hüllen verringert ist.

Erfindungsgemäß wird schließlich noch ein Verfahren zur Herstellung einer ein- oder mehrschichtigen Wursthülle vorgeschlagen. Darin werden die Komponenten, die die Hülle bzw. die einzelnen Schichten der Hülle bilden, in eine homogene Schmelze überführt. Die Schmelze wird durch eine Ringdüse extrudiert und dabei zu einem nahtlosen Schlauch geformt, den man anschließend in Längs- und Querrichtung verstreckt. Das Verfahren ist dadurch gekennzeichnet, daß mindestens eine Schicht aus dem obengenannten Polymerblend hergestellt wird. Das Mischen und Aufschmelzen kann in einem separaten Mischextruder erfolgen. Die durch Extrusion hergestellte nahtlose Schlauchfolie wird allgemein durch den Druck eines innen eingefüllten Gases (im Normalfall Luft) und durch Anlegen einer Zugspannung in Längsrichtung (z.B. durch ein Rollenpaar) in Längs- und Querrichtung verstreckt. Dieses als "Blasformen" bezeichnete Verfahren ist dem Fachmann allgemein bekannt. Durch das Verstrecken erlangt die Hülle eine wesentlich höhere Festigkeit. Um die unter Wärmeeinwirkung eintretende Schrumpfung zu verringern, wird die Schlauchfolie durch eine zusätzliche Wärmebehandlung teilfixiert ("Thermofixierung"). Die fertige Wursthülle zeigt allgemein in 80 °C heißem Wasser eine Schrumpfung von 5 bis 25 % in Längs- und Querrichtung. Die Dicke der verstreckten und thermofixierten Wursthülle beträgt allgemein 10 bis 50 *µ*m, bevorzugt 25 bis 45 *µ*m. Das Verfahren ist ebenfalls Teil der vorliegenden Erfindung.

Für spezielle Anwendungen kann die erfindungsgemäße Wursthülle auch mehrschichtig sein. Sie ist dann dadurch gekennzeichnet, daß sie mindestens eine Schicht aus dem oben angegebenen Polyamidblend enthält. Die weiteren Schichten bestehen bevorzugt aus Polyamiden (z. B. Polyamid 6), Polyamidmischungen, Polyolefinen wie Polyethylen oder Polypropylen, aber auch aus Polyolefinen, die mit haftvermittelnden funktionellen Gruppen ausgestattet sind, Copolymeren mit Einheiten aus ethylenisch ungesättigten Monomeren (z. B. Vinylacetat, Vinylalkohol, Acryl- und Methacrylsäure) sowie Vinylidenchlorid- oder Acrylnitril-Copolymeren, Ionomerharzen oder Mischungen der vorgenannten Polymeren.

Die erfindungsgemäße Mehrschichthülle besteht normalerweise aus 2 bis 5 Schichten. Vorzugsweise folgen der Schicht aus dem angegebenen Polyamidblend alternierend weitere Schichten vom Typ Polyolefin und Polyamid. Hergestellt wird eine solche Hülle durch Coextrusion mit Hilfe von Ringdüsen, die entsprechend der Zahl der Schichten speziell konstruiert sind. Dies bedeutet allerdings einen erheblich höheren technischen Aufwand.

Anschließend kann die ein- oder mehrschichtige Wursthülle mit einem Aufdruck versehen, abschnittsweise zu sogenannten "Raupen" gerafft oder in kleinere, einseitig abgebundene Stücke zerschnitten werden. Die kurzen, einseitig abgebundenen Stücke werden bei der manuellen Herstellung der Wurst verwendet.

In den folgenden Beispielen steht Gt für Gewichtsteile.

### Beispiel 1 (Vergleichs beispiel)

Ein Gemisch aus

| | |
|---|---|
| 80 Gt | Polyamid 6 (die relative Viskosität einer 1 gew.-%igen Lösung des Polyamids in 96 %iger Schwefelsäure bei 20 °C beträgt 4) |
| 10 Gt | Polyamid 6/69 (^{(R)}Grilon CF62BS der Ems-Chemie AG) (Schmelzvolumenindex: 40 ml in 10 min bei 190 °C und 10 kg Belastung) und |
| 10 Gt | Ethylen/Methacrylsäure-Copolymer (^{(R)} Nucrel 0903 HC der DuPont de Nemours Inc.) (Schmelz-index: 2,5 g in 10 min bei 190 °C und 2,16 kg Belastung) |

wurde in einem Einschnecken-Extruder bei 240 °C zu einer homogenen Schmelze plastifiziert und durch eine Ringdüse zu einem Schlauch von 18 mm Durchmesser extrudiert. Der Polymerschlauch wurde zunächst schnell abgekühlt, dann auf die zum Verstrecken erforderliche Temperatur erwärmt, nach dem Blasformverfahren verstreckt und schließlich thermofixiert, wobei das Streckverhältnis in Längs- und Querrichtung unverändert bleibt. Das Flächenstreckverhältnis betrug 9,6. Der Schlauch hatte einen Durchmesser von 66 mm.

### Beispiel 2

Ein Gemisch aus

| | |
|---|---|
| 70 Gt | Polyamid 6 (wie im Beispiel 1), |
| 10 Gt | Polyamid 6/69 (wie im Beispiel 1), |
| 10 Gt | amorphes Polyamid 6-I/6-T (^{(R)}Selar PA 3426 der DuPont de Nemours Inc.) (Schmelzindex: 90 g in 10 min bei 275 °C und einer Belastung von 10 kg) und |
| 10 Gt | Ethylen/Methacrylsäure-Copolymer (wie im Beispiel 1) |

wurden wie im Beispiel 1 beschrieben zu einer verstreckten und thermofixierten Wursthülle verarbeitet. Die Dimensionen der Hülle waren ebenfalls identisch.

### Beispiel 3

Ein Gemisch aus

| | |
|---|---|
| 60 Gt | Polyamid 6 (wie im Beispiel 1), |
| 20 Gt | Polyamid 6/69 (wie im Beispiel 1), |
| 10 Gt | amorphes Polyamid 6-I/6-T (wie im Beispiel 2) und |
| 10 Gt | Ethylen/Methacrylsäure-Copolymer (wie im Beispiel 1) |

wurde wie beschrieben zu einer biaxial verstreckten und thermofixierten Wursthülle verarbeitet. Auch hier waren die Dimensionen des Produkts identisch.

### Beispiel 4

Ein Gemisch aus

| | |
|---|---|
| 50 Gt | Polyamid 6 (wie im Beispiel 1), |
| 30 Gt | Polyamid 6,/69 (wie im Beispiel 1), |
| 10 Gt | amorphes Polyamid 6-I/6-T (wie im Beispiel 2) und |
| 10 Gt | Ethylen/Methacrylsäure-Copolymer (wie im Beispiel 1) |

wurde wie beschrieben zu einer biaxial verstreckten und thermofixierten Wursthülle verarbeitet. Das Flächenstreckverhältnis betrug wiederum 9,6 und der Durchmesser der fertigen Wursthülle 66 mm.

### Beispiel 5

Ein Gemisch aus

| | |
|---|---|
| 65 Gt | Polyamid 6 (wie im Beispiel 1), |
| 15 Gt | Polyamid 612 (^{(R)}Grilon CF6S der Ems-Chemie AG) (Schmelzindex: 50 g in 10 min bei 190 °C und einer Belastung von 10 kg), |
| 10 Gt | amorphes Polyamid 6-I/6-T (wie im Beispiel 2) und |
| 10 Gt | Ethylen/Methacrylsäure-Copolymer (wie im Beispiel 1) |

wurde wie beschrieben zu einer biaxial verstreckten und thermofixierten Wursthülle verarbeitet. Das Flächenstreckverhältnis betrug 9,2, der Durchmesser der fertigen Wursthülle 63 mm.

### Beispiel 6

Ein Gemisch aus

| | |
|---|---|
| 50 Gt | Polyamid 6 (wie im Beispiel 1), |
| 30 Gt | Polyamid 612 (wie im Beispiel 5), |
| 10 Gt | amorphes Polyamid 6-I/6-T (wie im Beispiel 2) und |
| 10 Gt | Ethylen/Methacrylsäure-Copolymer (wie im Beispiel 1) |

wurde wie beschrieben zu einer biaxial verstreckten und thermofixierten Wursthülle verarbeitet. Das Flächenstreckverhältnis betrug ebenfalls 9,2 und der Durchmesser der fertigen Wursthülle 63 mm.

### Beispiel 7

Zur Herstellung einer mehrschichtigen Wursthülle werden folgende Polymergemische verwendet:

| Gemisch A: | |
|---|---|
| 80 Gt | Polyamid 6 (wie im Beispiel 1), |
| 10 Gt | amorphes Polyamid 6-I/6-T (wie im Beispiel 2) und |
| 10 Gt | Polyamid 6/6,9 (wie im Beispiel 1) |

| Gemisch B: | |
|---|---|
| 70 Gt | Polyethylen niederer Dichte (^{(R)}Lupolen 1441D der BASF AG) mit einem Schmelzindex von 0,2 g in 10 mm bei 190 °C und 2,16 kg Belastung und |
| 30 Gt | eines linearen Polyethylens niederer Dichte (LLDPE), das durch Modifizierung mit Maleinsäureanhydrid haftvermittelnd gegenüber Polyamid ausgerüstet ist (^{(R)}Escor CTR 2000 von Exxon) mit einem Schmelzindex von 3 g in 10 mm bei 190 °C und 2,16 kg Belastung |

| Gemisch C: | |
|---|---|
| 85 Gt | Polyamid 6 (wie im Beispiel 1), |
| 15 Gt | amorphes Polyamid 6-I/6-T (wie im Beispiel 2) |

Diese Gemische wurden in drei Einschnecken-Extrudern bei jeweils 240 °C zu homogenen Schmelzen plastifiziert, anschließend in einer 3-Schicht-Ringdüse zusammengeführt und zu einem Schlauch von 18 mm Durchmesser coextrudiert. Dieser Schlauch wurde wie beschrieben zu einer biaxial verstreckten und thermofixierten Wursthülle verarbeitet. Das Flächenstreckverhältnis betrug 9,6 und der Durchmesser der fertigen Wursthülle 66 mm. Bei einer Gesamtfolienstärke von 55 *µ*m wiesen die Schichten folgende Dicken auf:
Außenschicht (Gemisch A): 30 *µ*m
Mittelschicht (Gemisch B): 20 *µ*m
Innenschicht (Gemisch C): 5 *µ*m

### Vergleichsbeispiel 1

Das reine Polyamid 6 aus Beispiel 1 wurde wie dort beschrieben zu einer Wursthülle verarbeitet. Das Flächenstreckverhältnis betrug 9,0.

### Vergleichsbeispiel 2

Ein Gemisch aus

| | |
|---|---|
| 80 Gt | Polyamid 6 (wie im Beispiel 1), |
| 10 Gt | amorphes Polyamid 6-I/6-T (wie im Beispiel 2) und |
| 10 Gt | Ethylen/Methacrylsäure-Copolymer (wie im Beispiel 1) |

wurde gemäß Beispiel 1 zu einer verstreckten und thermofixierten Wursthülle verarbeitet. Das Streckverhältnis betrug 9,0 und der Durchmesser der fertigen Wursthülle 61 mm.

### Vergleichsbeispiel 3

Eine einschichtige Wursthülle gemäß DE-C 28 50 181 mit einem Nenndurchmesser von 60 mm (^{(R)}Betan des Naturin-Werks Becker & Co.) wurde analog verarbeitet und gemessen.

### Vergleichsbeispiel 4

Eine einschichtige Wursthülle gemäß DE-C 28 50 182 mit einem Nenndurchmesser von 60 mm (^{(R)}Optan des Naturin-Werks Becker & Co.) wurde analog verarbeitet und gemessen.

Die Meßwerte in der folgenden Tabelle beweisen die Überlegenheit der erfindungsgemäßen Hüllen gegenüber dem Stand der Technik.

### Erklärung der Fußnoten:

1) Die Reißspannung wurde nach DIN 53455 an 30 min lang gewässerten Streifen von 15 mm Breite und einer Einspannlänge von 50 mm gemessen.
2) Hier wurde die prozentuale Zunahme des äußeren Umfangs von Schlauchabschnitten ermittelt, die man zuvor 30 min lang gewässert und anschließend bis zum Erreichen des angegebenen Innendrucks aufgeblasen hatte.
3) Die Hülle wurde einseitig mit Luft einer relativen Feuchte (r.H.) von 85 % bei 20 °C beaufschlagt. Die Messung der Wasserdampfdurchlässigkeit erfolgte nach DIN 53122.
4) Die 02-Durchlässigkeit wurde nach DIN 53380 bei 53 % r.H. und 23 °C gemessen.
5) Beurteilt wurde eine 30 min lang gewässerte Hülle nach subjektivem Empfinden. Die angegebenen Zahlen haben folgende Bedeutung: 1 = extrem weich, 2 = sehr weich, 3 = weich und 4 = mittel.
6) Dimensionsänderung nach 15 min Lagerung in Wasser bei 80 °C.
7) Die Schrumpfspannung wurde an trockenen Streifen von 15 mm Breite gemessen, die 3 min bei 100 °C und 0 % r.H. zwischen zwei Meßklemmen im Abstand von 100 mm eingespannt waren. Dieser Abstand blieb unverändert.
8) Die Hülle wurde per Hand mit feinkörnigem Brühwurst-Brät bei konstantem Fülldruck abgefüllt und mit Metallclips verschlossen. Anschließend wurden die Würste in einem Brühschrank 60 min bei 78 °C und 100 % r.H. gegart. Nach ihrem Abkühlen auf 7 °C wurden Aussehen und Konsistenz beurteilt.

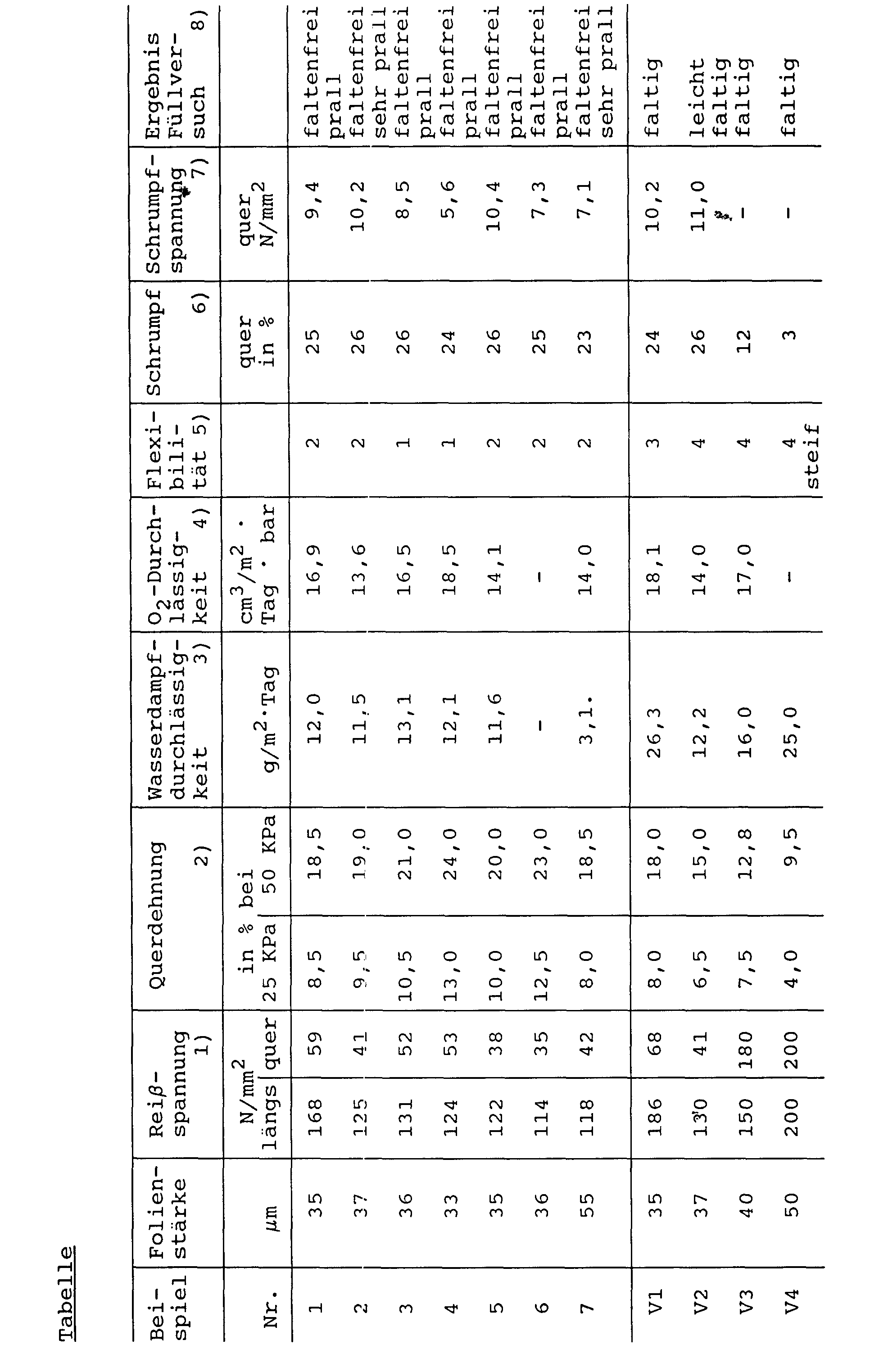

## Patentansprüche

1. Einschichtige, biaxial streckorientierte und thermofixierte Wursthülle auf Basis von Polyamid, da **durch gekennzeichnet, daß** sie im wesentlichen aus
a) Polyamid 6,
b) 5 bis 50 Gew.-%, bezogen auf das Gesamtgewicht aller Polymere in der Schicht, eines
b₁) aliphatischen Copolyamids mit Einheiten der Formeln -NH-[CH₂]₅-CO- und -NH-[CH₂]ₘ-CO-, wobei m eine ganze Zahl von 7 bis 11 ist, und/oder eines
b₂) aliphatischen Copolyamids mit Einheiten der Formeln -NH-[CH₂]₅-CO-, -NH-[CH₂]ₙ-NH- und -CO-[CH₂]ₒ-CO-, wobei n eine ganze Zahl von 6 bis 12 und o eine ganze Zahl von 7 bis 10 ist,
c) bis zu 20 Gew.-% eines amorphen Copolyamids mit Hexamethylendiamin-, Terephthalsäure- und Isophthalsäure-Einheiten
und gegebenenfalls
d) bis zu 20 Gew.-% eines mit Carboxygruppen modifizierten Polyolefins besteht.
von 95:5 bis 20:80, bevorzugt von 60:40 bis 30:70 beträgt.

2. Wursthülle gemäß Anspruch 1 **dadurch gekennzeichnet, daß** das molare Verhältnis der Einheiten der Formel -NH-[CH₂]₅-CO- zu den Einheiten der Formel -NH-[CH₂]ₘ-CO- in den aliphatischen Copolyamid b₁) von 95:5 bis 25:75, bevorzugt von 70:30 bis 30:70 beträgt.

3. Wursthülle gemäß Anspruch 1 oder 2, **dadurch gekennzeichnet, daß** das molare Verhältnis der Einheiten der Formel -NH-[CH₂]₅-CO- zu den Einheiten der Formeln -NH-[CH₂]ₙ-NH- und -CO-[CH₂]ₒ-CO- in den aliphatischen Copolyamiden b₂) von 95:5 bis 25:75, bevorzugt von 70:30 bis 30:70 beträgt.

4. Wursthülle gemäß einem oder mehreren der Ansprüche 1 bis 3, **dadurch gekennzeichnet, daß** in den aliphatischen Copolyamiden b₁) m = 7 oder 11 ist.

5. Wursthülle gemäß einem oder mehreren der Ansprüche 1 bis 4, **dadurch gekennzeichnet, daß** in den aliphatischen Copolyamiden b₂) n = 6 und o = 7, 8 oder 10 ist.

6. Wursthülle gemäß einem oder mehreren der Ansprüche 1 bis 5, **dadurch gekennzeichnet, daß** der Anteil der Komponente b) 10 bis 30 Gew.-%, der der Komponente c) 5 bis 15 Gew.-%, und der der Komponente d) ebenfalls 5 bis 15 Gew.-%, jeweils bezogen auf das Gesamtgewicht aller Polymere in der Schicht, beträgt.

7. Wursthülle gemäß einem oder mehreren der Ansprüche 1 bis 6, **dadurch gekennzeichnet, daß** das mit Carboxygruppen modifizierte Polyolefin d) ein Copolymer mit Einheiten aus Ethylen und (Meth)acrylsäure ist.

8. Mehrschichtige Wursthülle, **dadurch gekennzeichnet, daß** sie mindestens eine Schicht gemäß einem oder mehreren der Ansprüche 1 bis 7 enthält.

9. Wursthülle gemäß Anspruch 8, **dadurch gekennzeichnet, daß** der Schicht aus dem angegebenen Polyamidblend alternierend weitere Schichten vom Typ Polyolefin und Polyamid folgen.

10. Verfahren zur Herstellung einer ein- oder mehrschichtigen Wursthülle durch überführen der die Hülle bzw. die einzelnen Schichten der Hülle bildenden Komponenten in eine homogene Schmelze, Extrudieren der Schmelze durch eine Ringdüse unter Bildung eines nahtlosen Schlauchs, anschließendes Verstrecken der Hülle in Längs- und Querrichtung sowie Thermofixieren, **dadurch gekennzeichnet, daß** mindestens eine Schicht aus dem Polymerblend gemäß einem oder mehreren der Ansprüche 1 bis 7 hergestellt wird.

11. Verwendung der Wursthülle gemäß einem oder mehreren der Ansprüche 1 bis 9 für Brüh- und Kochwurst.

## Claims

1. A single-layered, biaxially stretch-oriented and thermoset polyamide-based sausage casing which essentially comprises
a) nylon 6,
b) 5 to 50% by weight, based on the total weight of all polymers in the layer, of a
b1 ) aliphatic copolyamide containing units of the formulae -NH-[CH₂]₅-CO- and -NH-[CH₂]ₘ-CO-, where m is an integer from 7 to 11, and/or an
b2) aliphatic copolyamide containing units of the formulae -NH-[CH₂]₅-CO-, -NH-[CH₂]ₙ-NH- and -CO-[CH₂]ₒCO-, where n is an integer from 6 to 12 and o is an integer from 7 to 10,
c) up to 20% by weight of an amorphous copolyamide containing hexamethylenediamine, terephthalic acid and isophthalic acid units
and with or without
d) up to 20% by weight of a polyolefin modified by carboxyl groups.

2. The sausage casing as claimed in claim 1, wherein the molar ratio of the units of the formula -NH-[CH₂]₅-CO- to the units of the formula - NH-[CH₂]ₘ-CO- in the aliphatic copolyamide b₁) is from 95:5 to 20:80, preferably from 60:40 to 30:70.

3. The sausage casing as claimed in claim 1 or 2, wherein the molar ratio of the units of the formula -NH-[CH₂]₅-CO- to the units of the formulae -NH-[CH₂]ₙ-NH- and -CO-[CH₂]ₒ-CO- in the aliphatic copolyamides b₂) is from 95: to 25:75, preferably from 70:30 to 30:70.

4. The sausage casing as claimed in one or more of claims 1 to 3, wherein, in the aliphatic copolyamides b₁), m = 7 or 11.

5. The sausage casing as claimed in one or more of claims 1 to 4, wherein, in the aliphatic copolyamides b₂), n = 6 and o = 7, 8 or 10.

6. The sausage casing as claimed in one or more of claims 1 to 5, wherein the proportion of the component b) is 10 to 30% by weight, that of the component c) is 5 to 15% by weight, and that of the component d) is likewise 5 to 15% by weight, in each case based on the total weight of all polymers in the layer.

7. The sausage casing as claimed in one or more of claims 1 to 6, wherein the polyolefin d) modified by carboxyl groups is a copolymer containing units of ethylene and (meth)acrylic acid.

8. A multi-layered sausage casing, wherein it contains at least one layer as claimed in one or more of claims 1 to 7.

9. The sausage casing as claimed in claim 8, wherein the layer made of the specified polyamide blend is followed in alternation by further layers of the polyolefin and polyamide type.

10. A process for the production of a single- or multi-layered sausage casing by converting the components forming the casing or the individual layers of the casing into a homogeneous melt, extruding the melt through a ring die, forming a seamless tube, then stretching the casing in the longitudinal and transverse directions and thermosetting, which comprises producing at least one layer of the polymer blend as claimed in one or more of claims 1 to 7.

11. Use of the sausage casing as claimed in one or more of claims 1 to 9 for scalded-emulsion sausage and cooked-meat sausage.

## Revendications

1. Enveloppe monocouche pour saucisses, à base de polyamide, orientée biaxialement par étirage et thermofixée, **caractérisée en ce qu'**elle est essentiellement constituée de
a) polyamide-6,
b) 5 à 50 % en poids, par rapport au poids total de tous les polymères dans la couche, d'un
b₁) copolyamide aliphatique à motifs de formules -NH-[CH₂]₅-CO- et -NH-[CH₂]ₘ-CO-, m étant un nombre entier allant de 7 à 11, et/ou d'un
b₂) copolyamide aliphatique à motifs de formules -NH-[CH₂]₅-CO-, -NH-[CH₂]ₙ-NH- et -CO-[CH₂]ₒ-CO-, n étant un nombre entier allant de 6 à 12 et o étant un nombre entier allant de 7 à 10,
c) jusqu'à 20 % en poids d'un copolyamide amorphe à motifs hexaméthylènediamine, acide téréphtalique et acide isophtalique,
et éventuellement
d) jusqu'à 20 % en poids d'une polyoléfine modifiée par des groupes carboxy.

2. Enveloppe pour saucisses selon la revendication 1, **caractérisée en ce que** le rapport molaire des motifs de formule -NH-[CH₂]₅-CO- aux motifs de formule -NH-[CH₂]ₘ-CO- dans le copolyamide aliphatique b₁) va de 95:5 à 20:80, de préférence de 60:40 à 30:70.

3. Enveloppe pour saucisses selon la revendication 1 ou 2, **caractérisée en ce que** le rapport molaire des motifs de formule -NH-[CH₂]₅-CO- aux motifs de formules -NH-[CH₂]ₙ-NH- et -CO-[CH₂]ₒ-CO- dans le copolyamide aliphatique b₂) va de 95:5 à 25:75, de préférence de 70:30 à 30:70.

4. Enveloppe pour saucisses selon une ou plusieurs des revendications 1 à 3, **caractérisée en ce que** dans les copolyamides aliphatiques b₁) m = 7 ou 11.

5. Enveloppe pour saucisses selon une ou plusieurs des revendications 1 à 4, **caractérisée en ce que** dans les copolyamides aliphatiques b₂) n = 6 et o=7, 8 ou 10.

6. Enveloppe pour saucisses selon une ou plusieurs des revendications 1 à 5, **caractérisée en ce que** la proportion du composant b) va de 10 à 30 % en poids, celle du composant c) va de 5 à 15 % en poids et celle du composant d) va elle aussi de 5 à 15 % en poids, dans chaque cas par rapport au poids total de tous les polymères dans la couche.

7. Enveloppe pour saucisses selon une ou plusieurs des revendications 1 à 6, **caractérisée en ce que** la polyoléfine d) modifiée par des groupes carboxy est un copolymère à motifs d'éthylène et d'acide (méth)acrylique.

8. Enveloppe multicouche pour saucisses, **caractérisée en ce qu'**elle contient au moins une couche selon une ou plusieurs des revendications 1 à 7.

9. Enveloppe pour saucisses selon la revendication 8, **caractérisée en ce qu'**à la couche à base du mélange de polyamides indiqué font suite en alternance d'autres couches du type polyoléfine et polyamide.

10. Procédé pour la fabrication d'une enveloppe mono- ou multicouche pour saucisses, par transformation en une masse fondue homogène des composants constituant l'enveloppe ou les couches individuelles de l'enveloppe, extrusion de la masse fondue à travers une filière annulaire, avec formation d'un boyau sans soudure, étirage subséquent de l'enveloppe dans le sens longitudinal et dans le sens transversal, ainsi que thermofixage, **caractérisé en ce qu'**au moins une couche est préparée à partir du mélange de polyamides selon une ou plusieurs des revendications 1 à 7.

11. Utilisation de l'enveloppe pour saucisses selon une ou plusieurs des revendications 1 à 9, pour saucisse à cuire ou à bouillir.
